# EUROPEAN PATENT SPECIFICATION

(11) **EP 2 167 884 B1**
(45) Date of publication and mention of the grant of the patent: **06.03.2019**
(21) Application number: 08759731.6
(22) Date of filing: 19.05.2008
(51) Int. Cl.: F24S 23/74

(54) **MIRROR FOR CONCENTRATING SOLAR POWER DEVICES**
SPIEGEL FÜR SONNENENERGIEKONZENTRATOREN
MIROIR POUR DES DISPOSITIFS DE CONCENTRATION D'ÉNERGIE SOLAIRE

(30) Priority: 25.05.2007 IT PD20070185
(43) Date of publication of application: 31.03.2010
(73) Proprietor: REFLEX S.p.A., 31056 Roncade (TV) (IT)
(72) Inventor: LUCATELLO, Luciano, I-31056 Roncade, Frazione Biancade (IT)
(74) Representative: Firmati, Leonardo
(86) International application number: PCT/EP2008/056105
(87) International publication number: WO 2008/145551

(56) References cited:
- GB-A- 2 104 238
- US-A- 3 626 723
- US-A- 4 337 997
- US-A- 4 678 292

## Description

### Technical Field

The present invention relates to a mirror for concentrating solar power devices.

### Background Art

Currently, concentrating solar power devices have solar mirrors which are composed of a plurality of mirror-finished plates which are curved so as to provide a semicylindrical-parabolic surface which is adapted to reflect the rays of the sun, concentrating them on the collector tube arranged at the rectilinear focal line of such surface.

Such plates are generally made of glass and are rendered reflective by silvering.

The plates are contoured, during their production, so as to have a curvature which is adapted to provide the semicylindrical-parabolic surface of the solar mirror.

Such plates are then generally glued to a series of supporting panels, which are fastened to the supporting frame, which is intended to support and orient the solar mirror obtained by arranging the panels mutually adjacent.

The use of such mirror-finished plates has the drawback that the process for forming them according to the desired curvature is complicated and expensive.

### Disclosure of the Invention

The aim of the present invention is to obviate this drawback, by providing a mirror, for concentrating solar power devices, whose formation according to the desired curvature is easy and cheaper than that of currently known mirrors.

Within this aim, an object of the invention is to provide a mirror for concentrating solar power devices which is simple, easy to use, and can be manufactured with low costs.

This aim and this and other objects, which will become better apparent hereinafter, are achieved by a mirror for concentrating solar power devices which can be associated with a curved supporting panel, characterized in that it comprises a fiat and thin mirror-finished plate which is flexible, as a consequence of a tempering treatment, for complementary shaping, by inflection, with respect to said panel, which is adapted to support it and keep it inflexed.

### Description of the drawings

Further characteristics and advantages of the invention will become better apparent from the following detailed description of a preferred but not exclusive embodiment of the mirror for concentrating solar power devices according to the invention, illustrated by way of non-limiting example in the accompanying drawings, wherein:

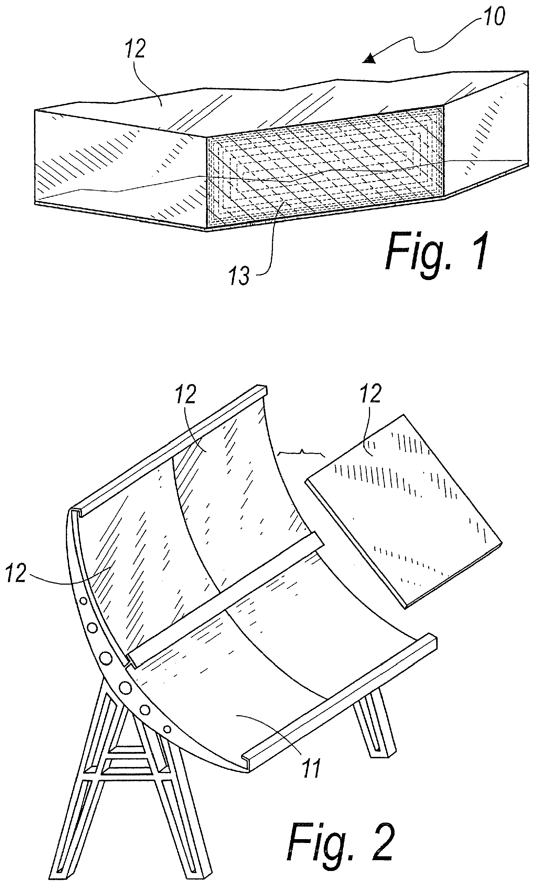

Figure 1 is a partially sectional enlarged-scale perspective view of a detail of the mirror according to the invention;
Figure 2 is a view of the application of the mirror according to the invention.

### Ways of carrying out the Invention

With reference to the figures, the reference numeral 10 generally designates a mirror according to the invention for concentrating solar power devices which can be associated with a curved supporting panel 11.

A particularity of the invention is that a mirror-finished plate 12 is flat, thin and flexible, as a consequence of a tempering treatment, for complementary shaping, by inflection, with respect to the panel 11.

By way of tempering, the plate 12 has its surface region 13 pretensioned. The plate 12 is chemically tempered and has a thickness comprised between 0.6 and 1.8 mm.

The chemically tempered plate 12 has the surface region 13 which is pretensioned, in a per se known manner, by replacing with potassium ions the sodium ions that are present in the glass of the plate 12.

This replacement, as is known, is obtained by immersion in a bath of potassium salts at a temperature higher than 380°C.

The pretensioned surface region 13 thus obtained affects a thickness between 20 and 100 microns in depth from the surface of the plate 12.

The use of the mirror for concentrating solar power devices according to the invention is as follows.

The plate 12 is manufactured flat and subsequently subjected to a tempering and silvering treatment.

In order to be applied to the panel 11, it is deformed elastically until it assumes its shape.

By way of its low thickness, the tensions to which its surface region 13 is subjected during deformation are limited.

Further, by way of the structural modification of the material of which it is composed, induced by tempering, it is adapted to withstand such tensions without breaking.

In practice it has thus been shown that the invention achieves the intended aim and object, by providing a mirror for concentrating solar power devices whose formation according to the desired curvature is easy, since it can be provided by simple elastic deformation of the plate.

Further, a mirror according to the invention is versatile in application, since the mirror-finished plate can be shaped, according to requirements, so as to adapt to surfaces which do not have a predefined shape.

The invention thus conceived is susceptible of numerous modifications and variations, all of which are within the scope of the appended claims; all the details may further be replaced with other 30 technically equivalent elements.

In practice, the materials employed, so long as they are compatible with the specific use, as well as the contingent shapes and dimensions, may be any according to requirements and to the state of the art.

## Claims

1. A mirror (10) for concentrating solar power devices, supported by a curved supporting panel (11), wherein the mirror (10) comprises a flat and thin mirror finished glass plate (12) which is flexible, as a consequence of a chemical tempering treatment, for complementary shaping, by inflection, with respect to said panel (11), which supports it and keeps it inflexed, wherein said plate (12) has a surface region (13) which is pretensioned by replacing with potassium ions the sodium ions present in the glass of which said plate (12) is made, wherein said surface region (13) comprises a surface thickness between 20 and 100 microns and wherein said plate (12) has a thickness comprised between 0.6 and 1.8 mm, said plate (12) being elastically deformed until it assumes the shape of the panel (11).

## Patentansprüche

1. Spiegel (10) für Sonnenenergiekonzentratoren, die von einer gekrümmten Trägerplatte (11) getragen werden, wobei der Spiegel (10) eine flache und dünne, hochglanzpolierte Glasplatte (12), die als Folge einer chemischen Temperierbehandlung flexibel ist, zur komplementären Formgebung durch Beugung in Bezug auf die Platte (11) umfasst, die sie trägt und sie unflexibel hält, wobei die Platte (12) einen Oberflächenbereich (13) aufweist, der durch Ersetzen der Natriumionen, die im Glas, aus dem die Platte (12) hergestellt ist, vorhanden sind, durch Kaliumionen vorgespannt ist, wobei der Oberflächenbereich (13) eine Oberflächendicke zwischen 20 und 100 Mikron umfasst und wobei die Platte (12) eine Dicke zwischen 0.6 und 1.8 mm aufweist, wobei die Platte (12) elastisch verformt ist, bis sie die Form der Platte (11) annimmt.

## Revendications

1. Miroir (10) pour des dispositifs de concentration d'énergie solaire supporté par un panneau de support incurvé (11), dans lequel le miroir (10) comprend une plaque de verre finie (12) de miroir plat et fin étant flexible suite à un traitement de revenu, pour un façonnage supplémentaire, par inflexion, par rapport au dit panneau (11) qui la supporte et qui la maintien infléchie, dans lequel ladite plaque (12) comporte une zone superficielle (13) étant prétendue par remplacement des ions potassium par les ions sodium présents dans le verre dont est constituée ladite plaque (12), dans lequel ladite zone superficielle (13) comprend une épaisseur superficielle comprise entre 20 et 100 microns et dans lequel ladite plaque (12) possède une épaisseur comprise entre 0,6 et 1,8 mm, ladite plaque (12) étant déformée élastiquement jusqu'à ce qu'elle adopte la forme du panneau (11).
